# EUROPEAN PATENT SPECIFICATION

(11) **EP 1 976 943 B1**
(45) Date of publication and mention of the grant of the patent: **30.03.2011**
(21) Application number: 07700160.0
(22) Date of filing: 15.01.2007
(51) Int. Cl.: C09D 5/00, C09D 5/08

(54) **WATER BASED PIPELINE PRIMER**
WASSERBASIERTES PIPELINEGRUNDIERMITTEL
PRIMAIRE AQUEUX DE CANALISATION

(30) Priority: 16.01.2006 DK 200600066
(43) Date of publication of application: 08.10.2008
(73) Proprietor: Phoenix International A/S, 6600 Vejen (DK)
(72) Inventor: SØRENSEN, Martin, DK-8660 Skanderborg (DK); JACKSON, Keith, Denbighshire LL11 3AP (GB)
(74) Representative: Zeuthen-Aagaard, Henrik
(86) International application number: PCT/DK2007/000021
(87) International publication number: WO 2007/079757

(56) References cited:
- EP-A1- 0 845 508
- US-A- 4 781 948

## Description

### Technical field

The present invention relates to a method for protecting iron or steel materials. Furthermore the invention relates to a primer to be used in the method and the use of the primer prior to a coating with a bituminous material.

### Technical background

Conventional protection of materials against corrosion, of for instance pipes to be used both offshore and onshore, starts with priming with a primer followed by hot application of a bituminous material. To support the bituminous material one or more layers of wrapping material or another supporting system such as a polymer coat is/are simultaneously applied to the liquid bituminous material.

The purpose of the primer is to ensure adhesion both with the metallic surface of the pipe and with the bituminous coating. It is also important that the entire protection system is sufficiently impermeable so as to ensure a high resistance against cathodic disbonding.

Some conventional primers consists of chlorinated rubber or a hydrocarbon resin, a plasticizer and a colouring matter together with solvents needed to give a consistency suitable for applying the primer.

WO 92/06141 discloses a primer including polychloroprene, chlorinated caoutchouc, terpene phenolic, silane and carbon black with xylene and methylenechloride as the solvents. This primer has been used in practice with an effective adhesion to the metal surface and to a bitumen based enamel. However the use of organic solvents leads to emissions of volatile organic compounds (VOCs). Such emissions are environmentally damaging and according to Directive 2004/42/CE of the European Parliament and of the Council of 21 April 2004 primers based on such volatile organic solvents will be phased out in the near future.

The European Standard EN 10300:2005 from European Committee for Standardization (CEN): "Steel tubes and fittings for onshore and offshore pipelines - Bituminous hot applied materials for external coating" mentions further to the above mentioned types of primers based on chlorinated rubber or hydrocarbon resin aqueous primers which are based on epoxy resins. Examples of this type of primers are the waterborne epoxy resin coating compositions disclosed in WO 00/01780 and WO 00/04106. Although such waterborne primers could avoid the emission of VOCs, the use of epoxy resins involves health hazards for the operator applying such primers.

Thus although the EN 10300:2005 allows epoxy resins in the primers there is a need for a less hazardous primer still being on an aqueous basis.

It is known to add a corrosion inhibiting pigment such as aluminium triphosphate to coating materials on acrylic basis to obtain coatings with anti-corrosive properties. To ensure the anti-corrosive properties the amount of the corrosion inhibiting pigment in such conventional coating materials is typically from 17 to 25 parts by weight based on 100 parts by weight of the acrylic binder both calculated as dry matter. Although such coatings used alone or as primers for many applications are found to have a satisfactory anti-corrosive effect, they have insufficient cohesive, adhesive and/or anti-corrosive effects when used as a primer applied on for instance onshore or offshore pipelines and followed by hot application of a bituminous material.

Accordingly it is an object of the present invention to provide a method and a primer formulation for the protection of materials against corrosion in combination with a coating of a bituminous material which method and primer fulfil the requirements for an anti-corrosive effect, cohesive and adhesive strength, low to no emission of VOCs.

### Brief description of the invention

Accordingly the present invention relates to a method of protecting iron or steel materials against corrosion comprising priming with a water borne primer composition containing a) a binder of one or more acrylic copolymers based on one or more acrylic monomers and one or more chlorinated monomers, b) a corrosion inhibiting pigment, c) one or more further pigments, d) optionally conventional additives and/or adjuvants, and e) water, and coating with a bituminous material, wherein the content of the corrosion inhibiting pigment (b) is 2 to 12 parts by weight, more preferred, 3 to 8 parts by weight, based on 100 parts by weight of the binder (a) both calculated as dry matter.

The invention also relates to a bonding and anti-corrosive primer in form of an aqueous composition containing a) a binder of one or more acrylic copolymers based on one or more acrylic monomers and one or more chlorinated monomers, b) a corrosion inhibiting pigment, c) one or more further pigments, d) optionally conventional additives and/or adjuvants, and e) water, wherein the content of the corrosion inhibiting pigment (b) is 2 to 12 parts by weight, more preferred, 3 to 8 parts by weight, based on 100 parts by weight of the binder (a) both calculated as dry matter.

In a further preferred embodiment a substantial portion of the further pigments (c), i.e. the remaining pigments apart from the corrosion inhibiting pigment, includes lamellar pigments. Use of lamellar pigments gives a primer with improved adhesive and cohesive strengths and also assists in reducing the rate of water diffusion through the coating.

In principle any known corrosion inhibiting pigments are usable as the component b). Suitable examples of the corrosion inhibiting pigments are metal phosphate pigments. Any such metal phosphate pigments are usable as the corrosion inhibiting pigments (b) provided the metal cation has no detrimental effect on the primer performance. Not limiting examples of contemplated corrosion inhibiting pigments are aluminium triphosphate, barium phosphate, zinc phosphate, phosphosilicates and ion exchanged pigments including mixtures thereof.

### Examples of suitable lamellar pigments (c) are talc (magnesium silicate hydrate) and mica (potassium aluminium silicate)

Typically the acrylic copolymer basis (a) includes acrylic monomers and monomers of mono- and/or di-halogenated C₂ - C₁₂-olefins, for example acrylic monomer combined with vinyl chloride and vinylidene chloride.

Compared with conventional anti-corrosive coating formulations based on a vinyl/acrylic binder and a corrosion inhibiting pigment as an anti-corrosive ingredient, the amount of the anti-corrosive pigment in the inventive primer is substantially smaller in general. As mentioned above a conventional anti-corrosive acrylic coating typically includes 17 to 25 parts by weight of a corrosion inhibiting pigment as compared with 2 to 12 parts by weight in the inventive primer, both based on 100 parts by weight of the binder and calculated as dry matter.

Bearing in mind that the use of a conventional anti-corrosive acrylic coating as a primer followed by coating with a bituminous material cannot fulfil the requirements of corrosion inhibition, it is quite surprising that a corresponding primer having a lower content of an anti-corrosive pigment fulfils this requirement of a cathodic disbonding of maximum 10 mm (European Standard EN 10300:2005; 4,2,4,1 Table 3).

The extent of applicability of the invention appears from the following detailed description. It should, however, be understood that the detailed description and the specific examples are merely included to illustrate the preferred embodiments, and that various alterations and modifications within the scope of protection will be obvious to persons skilled in the art on the basis of the detailed description.

### Detailed description of the invention

The binder of the inventive primer is a conventional acrylic binder for anti-corrosion coatings. The binder may be a copolymer of vinylidene chloride and/or vinyl chloride with one or more alkyl acrylates having from 1 to 12 carbon atoms in the alkyl group and/or one or more alkyl methacrylates having from 2 to 12 carbon atoms in the alkyl group and/or one or more aliphatic alpha-beta-unsaturated carboxylic acids and/or halogenated olefins of 2 - 12 carbon atoms.

An example of a suitable binder is the waterborne airdrying vinyl/acrylic copolymer designed for protection of steel available under the trade mark Haloflex® from DSM NeoResins, Waalwijk The Netherlands.. Haloflex® is based on vinyl chloride and vinylidene chloride as the principal hard and soft monomers and is modified with acrylics.

Anti-corrosive coating compositions based on such binder includes a suitable amount of pigments. Such pigments may include anti-corrosive pigments, such as phosphates, and extenders. As mentioned above the recommended amount of an anti-corrosive pigment according to the prior art primer or coating compositions for steel protection is 17 to 25 parts by weight based on 100 parts by weight of the binder calculated as dry matter. The remaining amount of pigments is typically 42 - 100 parts by weight based on 100 parts by weight of the binder calculated as dry matter.

An important test for the anti-corrosive properties of a coating is the cathodic disbonding test (EN 10300:2005, Annex I) in which the disbonded radius in mm caused by an applied voltage in 28 days is determined. The requirements for steel tubes coated with a bitumen based enamel coating in conjunction with an appropriate primer by this cathodic disbonding test is maximum 10 mm (EN 10300:2005, 4.2.4.1, table 3).

As appears from the following example an anti-corrosive coating composition containing 21.5 parts by weight of aluminium triphosphate based on 100 parts by weight of the Haloflex® - calculated as dry matter - does not meet this requirement as the cathodic disbonding was 15 mm.

By some preliminary tests it was found that a reduction of the corrosion inhibitor from the conventional 17 to 25 parts by weight based on 100 parts by weight of the binder down to about 11 parts by weight did not- as expected - worsen the cathodic disbonding. Surprisingly the cathodic disbonding was reduced. After further test 4 - 7 parts by weight, for example about 5 parts by weight of aluminium triphosphate based on 100 parts by weight of the binder calculated as dry matter are at the present time believed to give the most satisfactory corrosion inhibiting results.

Based on the above findings the primer used by the present invention differs from the prior art anticorrosive coating compositions by a lower amount of the anticorrosive pigment, which is 2 to 12 parts by weight based on 100 parts by weight of the Haloflex® binder calculated as dry matter. Preferably the total amount of pigments should not be changed. Accordingly, the remaining amount of pigments will typically be 40 - 85 parts by weight based on 100 parts by weight of the binder calculated as dry matter. As shown in the example a primer with 5 parts by weight based on 100 parts by weight of the binder gives a cathodic disbonding value of 8 mm meeting the maximum 10 mm requirement.

A preferred anti-corrosive pigment for use in the primer in connection with a bituminous coating is aluminium triphosphate such as K-White 84 available from Tayca. Corporation, Osaka, Japan. Also other corrosion inhibiting pigments such as barium phosphate zinc phosphate, phosphosilicates and ion exchanged pigments are contemplated.

Further to the corrosion inhibiting pigments the primer composition contains other pigments suitable for use in anti-corrosive compositions including colouring pigments and extenders. Preferably a major amount of these "non-corrosion-inhibiting" pigments are lamellar pigments because lamellar pigments provide a primer with improved adhesive and cohesive strengths, and also assist in reducing the rate of water diffusion through the coating. Examples of useful lamellar pigments are talc, (magnesium silicate hydrate) and mica (potassium aluminium silicate),

Typically also a minor amount of other pigments will be included for example for colouring purposes. A suitable example is carbon black.

Apart from the binder and pigments the primer may also contain one or more optional conventional additives and/or adjuvants known in the art. Examples thereof include - but are not limited to coalescents, thickeners, defoamers, stabilisers, wetting agents, preservatives, dispersing agents, flash rust inhibitors and pH regulators. The total amount of such additives and/or adjuvants is typically between 1 and 30 % by weight based on the binder calculated as dry matter, preferably 8 - 25 % by weight.

An important feature of the primer composition is that the ratio (b):(a) by weight of the corrosion inhibiting pigment (b) to the binder (a) is 2:100 -12:100. Preferably the ratio (b):(a) is 3.4:100 - 8.5:100, even more preferred 4:100 - 7:100.

As stated above at least a major part of the "non-corrosion-inhibiting" or other pigments (c) should be lamellar pigments, such as talc. Thus at least 50 % by weight, preferably at least 75 % by weight and more preferred at least 85 % by weight of the "non-corrosion-inhibiting" pigments should be lamellar pigments.

Due to the excellent bonding properties the inventive primer is suitable together with any conventional bituminous materials of the type used for external coating of steel tubes and fittings for onshore and offshore pipelines. Such materials - also termed bitumen based coating enamels - can be oxidized, non-oxidized or modified bitumen enamels. Such enamels may or may not contain a filler and they are normally applied in hot state.

### Example

A waterborne primer according to the invention (Primer 1) with about 5 parts by weight of aluminium triphosphate per 100 parts by weight of vinyl chloride/vinylidene chloride/acrylic copolymer and two comparative primers (Primers A and B) with about 21.5 parts by weight of aluminium triphosphate per 100 parts by weight of vinyl chloride/vinylidene chloride/acrylic copolymer were prepared and applied on clean steel plates in accordance with European Standard EN 10300:2005, Annexes A and B. The compositions of the tested primers are shown in table 1.

**Table 1**

| Ingredients (% w/w) | Primer 1 (according to the invention) | Primer A | Primer B |
|---|---|---|---|
| Vinyl/acrylic binder (Haloflex® 202S) | 47.41 | 45.32 | 47.38 |
| Aluminium triphosphate (K-White 84) | 1.41 | 5.74 | 6.00 |
| Talc (Westmin D30E) | 24.55 | 23.47 | 20.00 |
| Bentone LT | 0.20 | 0.19 | 0.20 |
| Anti foaming agent (Foamaster® H2) | 0.26 | 0.24 | 0.26 |
| 20% Synperonic® F87 | 1.04 | 0.99 | 1.04 |
| Wetting agent BYK 181 | 0.21 | 0.20 | 0.21 |
| Pigment paste Black CRE2 | 1.76 | 1.69 | 1.76 |
| Dipropylene glycol monomethyl ether (Dowariol® DPM) | 0.98 | 0.94 | 0.98 |
| Butyl glycol | 0.98 | 0.94 | 0.98 |
| Emadox® NA | 0.28 | 0.27 | 0.28 |
| Water | 20.92 | 20.01 | 20.91 |
| | 100 | 100 | 100 |
| K-White 84/Haloflex 2025, (w/w, dry matter) x 100 | 5.04 | 21.47 | 21.46 |

| | | | |
|---|---|---|---|
| Haloflex®202S is available from DSM NeoResins, Waalwijk The Netherlands; the non volatile content of Haloflex®202S is about 59 % w/w. K-White 84 (aluminium triphosphate) is available from Tayca Corporation, Osaka, Japan. Westmin D30E is available from Mondo Minerals OY, Helsinki, Finland Bentone® LT is a suspending agent (thickener) of hectorite and hydroxyethylcellulose, available from Elementis Specialties, Inc. Hightstown, NJ, USA. Foamaster® H2, anti foaming agent available from Cognis, Düsseldorf, Germany. Synperonic® F87 is a nonionic stabilisator available from Uniqema, Gouda, The Netherlands Byk 181 is an alkylolammonium salt of a polyfunctional anionic/nonionic polymer available from Byk Chemie, Wessel, Germany. Dowanol® DPM is available from Dow Chemical Company. Midland, MI, USA. Emadox® NA is a flash rust inhibitor from Laboratoires Labema, Lorette, France. | | | |

A category 2 bitumen enamel coating (EN 10300:2005; 5.3.2.3) was then applied to the primed steel plates in accordance with (EN10300:2005, Annex C). The primed and coated plates were tested according to EN 10300:2005 to estimate sag (Annex D), impact (Annex E), peel (Annex F), bend (Annex G) and catodic disbonding (Annex I). The results are shown in Table 2.

**Table 2**

| | | Primer 1 (according to the invention) | Primer A | Primer B |
|---|---|---|---|---|
| Peel, mm | 30 °C | 0.0 | 0.0 | 0.0 |
| | 40 °C | 0.5 | 0.5 | 0.5 |
| | 50 °C | 0.0 | 0.0 | 0.0 |
| | 60 °C | 0.0 | 0.0 | 0.0 |
| Impact, 25 °C, mm² | | 4100 | 4200 | 4000 |
| Sag, 75 °C, mm | | 0.5 | 0.5 | 0.5 |
| Bend, 0 °C, mm | | > 15 | > 15 | > 15 |
| Cathodic disbonding, mm | | 8 | 15 | 17 |

The test results show that the inventive primer (primer 1) meets the requirements for the corrosion inhibiting effect as the cathodic disbonding is below the maximum value of 10 mm according to EN 10300:2005, 4.2.4.1, table 3. The comparative primers A and B do not meet this requirement although they both have a larger amount of the corrosion inhibiting aluminium triphosphate.

## Claims

1. A method for protecting iron or steel materials against corrosion comprising priming with a water borne primer composition containing
a) a binder of one or more acrylic copolymers based on one or more acrylic monomers and one or more chlorinated monomers,
b) a corrosion inhibiting pigment,
c) one or more further pigments,
d) optionally conventional additives and/or adjuvants, and
e) water,
and coating with a bituminous material, **characterised in, that** the content of the corrosion inhibiting pigment (b) is 2 - 12 parts by weight based on 100 parts by weight of the binder (a) calculated as dry matter.

2. A method according to claim 1, **characterised in, that** the said further pigments (c) include lamellar pigments.

3. A method according to one of the preceding claims, **characterised in, that** the corrosion inhibiting pigment (b) is a phosphate pigment.

4. A method according to claim 3, **characterised in, that** the corrosion inhibiting phosphate pigment (b) is aluminium triphosphate.

5. A method according to claim 2, **characterised in, that** the lamellar pigments (c) include talc and/or mica..

6. A method according to one of the preceding claims, wherein the acrylic copolymer basis (a) includes acrylic monomers and monomers of mono- and/or di-halogenated C₂ - C₁₂-olefins.

7. A primer in form of an aqueous composition containing
a) a binder of one or more acrylic copolymers based on one or more acrylic monomers and one or more chlorinated monomers,
b) a corrosion inhibiting pigment,
c) one or more further pigments,
d) optionally conventional additives and/or adjuvants, and
e) water,
**characterised in, that** the content of the corrosion inhibiting pigment (b) is 2 - 12 parts by weight based on 100 parts by weight of the binder (a) calculated as dry matter.

8. A primer according to claim 9, **characterised in, that** said further pigments (c) Include lamellar pigments.

9. A primer according to any one of the claims 7 to 8, **characterised in, that** the corrosion inhibiting pigment (b) is a phosphate pigment.

10. A primer according to claim 9, **characterised in, that** the corrosion inhibiting phosphate pigment (b) is aluminium triphosphate.

11. A primer according to one of the preceding claims 9 to 10, **characterised in, that** the lamellar pigments (c) include talc and/or mica.

12. A primer according to one of the preceding claims 7 to 11, wherein the acrylic copolymer basis (a) includes acrylic monomers and monomers of mono- and/or di-halogenated C₂ - C₁₂-olefins.

13. Use of a primer according to one of the claims 7 to 12 in a method for protecting materials against corrosion by priming with the primer and coating with a bituminous material.

14. Use according to claim 13 wherein the materials to be protected are onshore or offshore materials including pipelines.

## Patentansprüche

1. Verfahren zum Schützen von Eisen- oder Stahlmaterialien vor Korrosion, Grundieren mit einer wässrigen Grundiermittelzusammensetzung umfassend, die Folgendes enthält:
a) ein Bindemittel aus einem oder mehreren Acrylcopolymer/en auf Basis eines Acrylmonomers oder mehrerer Acrylmonomere und eines Chlormonomers oder mehrerer Chlormonomere,
b) ein korrosionshemmendes Pigment,
c) ein weiteres Pigment oder mehrere weitere Pigmente,
d) wahlweise herkömmliche Zusätze und/oder Hilfsstoffe, und
e) Wasser,
und Beschichten mit einem bituminösen Material, **dadurch gekennzeichnet, dass** es sich bei dem Gehalt des korrosionshemmenden Pigments (b) um 2 - 12 Gewichtsteile basierend auf 100 Gewichtsteilen des Bindemittels (a) berechnet als Trockenmasse handelt.

2. Verfahren nach Anspruch 1, **dadurch gekennzeichnet, dass** die weiteren Pigmente (c) Lamellenpigmente umfassen.

3. Verfahren nach einem der vorhergehenden Ansprüche, **dadurch gekennzeichnet, dass** das korrosionshemmende Pigment (b) ein Phosphatpigment ist.

4. Verfahren nach Anspruch 3, **dadurch gekennzeichnet, dass** das korrosionshemmende Phosphatpigment (b) Aluminiumtriphosphat ist.

5. Verfahren nach Anspruch 2, **dadurch gekennzeichnet, dass** die Lamellenpigmente (c) Talkum und/oder Glimmer umfassen.

6. Verfahren nach einem der vorhergehenden Ansprüche, wobei die Acrylcopolymerbasis (a) Acrylmonomere und Monomere aus mono- und/oder dihalogenierten C₂ - C₁₂-Olefinen umfasst.

7. Grundiermittel in Form einer wässrigen Zusammensetzung, Folgendes enthaltend:
a) ein Bindemittel aus einem oder mehreren Acrylcopolymeren auf Basis eines Acrylmonomers oder mehrerer Acrylmonomere und eines Chlormonomers oder mehrerer Chlormonomere,
b) ein korrosionshemmendes Pigment,
c) ein weiteres Pigment oder mehrere weitere Pigmente,
d) wahlweise herkömmliche Zusätze und/oder Hilfsstoffe, und
e) Wasser,
**dadurch gekennzeichnet, dass** es sich bei dem Gehalt des korrosionshemmenden Pigments (b) um 2 - 12 Gewichtsteile basierend auf 100 Gewichtsteilen des Bindemittels (a) berechnet als Trockenmasse handelt.

8. Grundiermittel nach Anspruch 9, **dadurch gekennzeichnet, dass** die weiteren Pigmente (c) Lamellenpigmente umfassen.

9. Grundiermittel nach einem der Ansprüche 7 bis 8, **dadurch gekennzeichnet, dass** das korrosionshemmende Pigment (b) ein Phosphatpigment ist.

10. Grundiermittel nach Anspruch 9, **dadurch gekennzeichnet, dass** das korrosionshemmende Phosphatpigment (b) Aluminiumtriphosphat ist.

11. Grundiermittel nach einem der vorhergehenden Ansprüche 9 bis 10, **dadurch gekennzeichnet, dass** die Lamellenpigmente (c) Talkum und/oder Glimmer umfassen.

12. Grundiermittel nach einem der vorhergehenden Ansprüche 7 bis 11, wobei die Acrylcopolymerbasis (a) Acrylmonomere und Monomere aus mono- und/oder dihalogenierten C₂ - C₁₂-Olefinen umfasst.

13. Verwendung eines Grundiermittels nach einem der Ansprüche 7 bis 12 in einem Verfahren zum Schützen von Materialien vor Korrosion durch Grundieren mit dem Grundiermittel und Beschichten mit einem bituminösen Material.

14. Verwendung nach Anspruch 13, wobei es sich bei den zu schützenden Materialien um Onshore- oder Offshore-Materialien einschließlich Rohrleitungen handelt.

## Revendications

1. Procédé de protection de matériaux en fer ou en acier contre la corrosion comprenant l'application d'un primaire avec une composition de primaire à base d'eau contenant
a) un liant d'un ou plusieurs copolymères acryliques à base d'un ou plusieurs monomères acryliques et d'un ou plusieurs monomères chlorés,
b) un pigment inhibiteur de corrosion,
c) un ou plusieurs autres pigments,
d) éventuellement des additifs et/ou des adjuvants classiques, et
e) de l'eau,
et le dépôt d'un matériau bitumeux, **caractérisé en ce que** la teneur du pigment inhibiteur de corrosion b) est de 2-12 parties en masse rapportées à 100 parties en masse du liant a) calculées comme matière sèche.

2. Procédé selon la revendication 1, **caractérisé en ce que** lesdits autres pigments c) comprennent des pigments lamellaires.

3. Procédé selon l'une quelconque des revendications précédentes, **caractérisé en ce que** le pigment inhibiteur de corrosion b) est un pigment de phosphate.

4. Procédé selon la revendication 3, **caractérisé en ce que** le pigment de phosphate inhibiteur de corrosion b) est le triphosphate d'aluminium.

5. Procédé selon la revendication 2, **caractérisé en ce que** les pigments lamellaires c) comprennent de la stéatite et/ou du mica.

6. Procédé selon l'une quelconque des revendications précédentes, dans lequel la base de polymère acrylique a) comprend des monomères acryliques et des monomères d'oléfines en C₂-C₁₂ mono- et/ou dihalogénées.

7. Primaire dans la forme d'une composition aqueuse contenant
a) un liant d'un ou plusieurs copolymères acryliques à base d'un ou plusieurs monomères acryliques et d'un ou plusieurs monomères chlorés,
b) un pigment inhibiteur de corrosion,
c) un ou plusieurs autres pigments,
d) éventuellement des additifs et/ou des adjuvants classiques, et
e) de l'eau,
**caractérisé en ce que** la teneur du pigment inhibiteur de corrosion b) est de 2-12 parties en masse rapportées à 100 parties en masse du liant a) calculées comme matière sèche.

8. Primaire selon la revendication 9, **caractérisé en ce que** lesdits autres pigments c) comprennent des pigments lamellaires.

9. Primaire selon l'une quelconque des revendications 7 à 8, **caractérisé en ce que** le pigment inhibiteur de corrosion b) est un pigment de phosphate.

10. Primaire selon la revendication 9, **caractérisé en ce que** le pigment de phosphate inhibiteur de corrosion b) est le triphosphate d'aluminium.

11. Primaire selon l'une quelconque des revendications précédentes 9 à 10, **caractérisé en ce que** les pigments lamellaires c) comprennent de la stéatite et/ou du mica.

12. Primaire selon l'une quelconque des revendications précédentes 7 à 11, dans lequel la base de copolymère acrylique a) comprend des monomères acryliques et des monomères d'oléfines en C₂-C₁₂ mono- et/ou dihalogénées.

13. Utilisation d'un primaire selon l'une quelconque des revendications 7 à 12 dans un procédé pour la protection de matériaux contre la corrosion par l'application du primaire et le dépôt d'un matériau bitumeux.

14. Utilisation selon la revendication 13, dans laquelle les matériaux à protéger sont des matériaux à terre ou en mer comprenant des canalisations.
